# EUROPEAN PATENT APPLICATION

(11) **EP 4 303 980 A1**
(43) Date of publication of application: **10.01.2024**
(21) Application number: 22763475.5
(22) Date of filing: 04.02.2022
(51) Int. Cl.: H01M 10/0567, H01M 10/052

(54) **ELECTROLYTE SOLUTION FOR SECONDARY BATTERY, AND SECONDARY BATTERY COMPRISING SAME**

(30) Priority: 04.03.2021 KR 20210028511
(71) Applicant: DONGWHA ELECTROLYTE CO., LTD., Chungcheongnam-do 32925 (KR)
(72) Inventor: SON, Bumsuk, Daejeon 34023 (KR); BEEN, Yurim, Daejeon 35375 (KR); PARK, Jong-Ho, Incheon 22003 (KR); SHIN, Jae Wook, Daejeon 34637 (KR); KWON, Sewon, Daejeon 35265 (KR); PARK, Jae Hwan, Hwaseong-si Gyeonggi-do 18305 (KR)
(74) Representative: Mewburn Ellis LLP
(86) International application number: PCT/KR2022/001751
(87) International publication number: WO 2022/186490

(57) **Abstract**

The present invention relates to a non-aqueous electrolyte solution for a secondary battery, and a secondary battery comprising same. Adding a compound represented by chemical formula 1 or chemical formula 2 to a non-aqueous electrolyte solution for a secondary battery according to the present invention has the effect of improving room-temperature and high-temperature thermal stability characteristics, and high-temperature storage characteristics.

## Description

### [Technical Field]

The present invention relates to an electrolyte solution for a secondary battery and a secondary battery including the same, and more particularly to a non-aqueous electrolyte solution for a secondary battery and a secondary battery including the same, in which a compound of Chemical Formula 1 or Chemical Formula 2 is added to a non-aqueous electrolyte solution for a lithium ion secondary battery, thereby effectively increasing the stability of the non-aqueous electrolyte solution.

### [Background Art]

Recently, portable electronic devices have been widely spread, and accordingly, these portable electronic devices are becoming thinner, smaller, and lighter. Thus, thorough research into manufacturing secondary batteries serving as power sources thereof, which are small and lightweight, are capable of charging and discharging for a long time, and have increased high-rate characteristics, is ongoing.

Secondary batteries are classified into lead-acid batteries, nickelcadmium (Ni-Cd) batteries, nickel-hydrogen (Ni-MH) batteries, lithium batteries, and the like, depending on the type of anode material or cathode material, and the potential and energy density thereof are determined by unique characteristics of the electrode materials. Thereamong, lithium secondary batteries have high energy density due to low oxidation/reduction potential and molecular weight of lithium and are thus mainly used as power sources for driving portable electronic devices such as laptop computers, camcorders, and mobile phones. However, lithium secondary batteries have a major problem in that safety thereof is deteriorated during continuous charging. One of causes that may affect battery stability is heat generation due to structural collapse of the cathode, and the battery stability based on the principle of operation of a secondary battery, especially a non-aqueous electrolyte secondary battery, is described below. Specifically, the cathode active material of the non-aqueous electrolyte secondary battery includes lithium-containing metal oxide capable of intercalating and deintercalating lithium and/or lithium ions. Such a cathode active material is modified into a thermally unstable structure because a large amount of lithium is deintercalated during overcharging. In this overcharged state, when the battery temperature reaches a critical temperature due to external physical impact, such as exposure to high temperatures, etc., oxygen is released from the cathode active material having an unstable structure, and the released oxygen causes exothermic decomposition reaction with the solvent of the electrolyte solution. In particular, since combustion of the electrolyte solution is further accelerated by oxygen released from the cathode, ignition and rupture of the battery due to thermal runaway are caused by this chain of exothermic reactions. In addition, the cathode transition metal precipitated on the anode acts as a catalyst that accelerates decomposition of the non-aqueous electrolyte, generating gas inside the battery, or interfering with movement of lithium ions due to the SEI layer of the anode during charging/discharging, ultimately greatly lowering battery performance and efficiency.

Meanwhile, in a battery with a high-capacity Ni-rich cathode, residual lithium (LiOH, Li₂CO₃) and residual water may promote side reactions of lithium salts in the non-aqueous electrolyte solution. Byproducts are generated through side reactions of lithium salts in the non-aqueous electrolyte solution, which causes discoloration of the electrolyte solution and impairs battery characteristics.

With the goal of solving the above problems, therefore, Japanese Patent Application Publication No. 2013-157305 discloses an electrolyte solution including a compound having two isocyanate groups, and Korean Patent No. 10-0412522 discloses an electrolyte solution including di-t-butylsilyl bis(trifluoromethanesulfonate), trimethylsilyl methanesulfonate, trimethylsilyl benzenesulfonate, trimethylsilyl trifluoromethanesulfonate, triethylsilyl trifluoromethanesulfonate, etc., but there is still a need for research into electrolyte solutions with excellent room-temperature and high-temperature thermal stability and high-temperature storability.

Currently, development of additives capable of improving thermal stability and high-temperature storability of secondary batteries is required.

Accordingly, the present inventors have made great efforts to solve such problems, and thus ascertained that, when a compound of Chemical Formula 1 or Chemical Formula 2 is added to a non-aqueous electrolyte solution, generation of byproducts in the electrolyte solution may be suppressed by virtue of stabilization of the non-aqueous electrolyte solution, such that discoloration due to decomposition of the electrolyte solution may be prevented, and battery internal resistance characteristics may be improved and high-temperature storage efficiency (capacity retention/recovery) may be increased, thus culminating in the present invention. In addition, the present invention has a structure different and distinguished from conventional additives that stabilize electrolyte solutions, and has superior performance.

### [Disclosure]

It is an object of the present invention to provide a non-aqueous electrolyte solution for a secondary battery with increased room-temperature and high-temperature thermal stability and high-temperature storability.

It is another object of the present invention to provide a secondary battery having excellent room-temperature and high-temperature thermal stability and high-temperature storability.

In order to accomplish the above objects, the present invention provides a non-aqueous electrolyte solution for a secondary battery including (A) a lithium salt, (B) a non-aqueous organic solvent, and (C) at least one additive selected from the group consisting of a compound represented by Chemical Formula 1 and a compound represented by Chemical Formula 2 below.

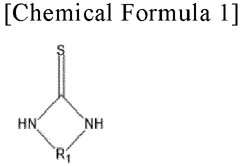

In Chemical Formula 1, R₁ is independently a C1-C3 alkyl.

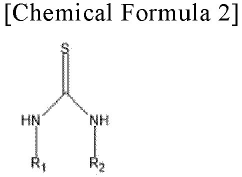

In Chemical Formula 2, R₁ and R₂ are each independently a hydrogen atom or a C1-C9 alkyl.

In addition, the present invention provides a secondary battery including (a) a cathode including a cathode active material capable of intercalating and deintercalating lithium, (b) an anode including an anode active material capable of intercalating and deintercalating lithium, (c) the electrolyte solution described above, and (d) a separator.

### [Mode for Invention]

Unless otherwise defined, all technical and scientific terms used herein have the same meanings as typically understood by those skilled in the art to which the present invention belongs. In general, the nomenclature used herein is well known in the art and is typical.

In the present invention, a non-aqueous electrolyte solution for a secondary battery is stabilized by adding an additive, which is a compound of Chemical Formula 1 or Chemical Formula 2, to the non-aqueous electrolyte solution, thus suppressing generation of byproducts in the electrolyte solution, thereby preventing discoloration due to decomposition of the electrolyte solution, and improving battery internal resistance characteristics and increasing high-temperature storage efficiency (capacity retention/recovery).

Accordingly, an aspect of the present invention pertains to a non-aqueous electrolyte solution for a secondary battery including (A) a lithium salt, (B) a non-aqueous organic solvent, (C) at least one additive selected from the group consisting of a compound represented by Chemical Formula 1 and a compound represented by Chemical Formula 2 below.

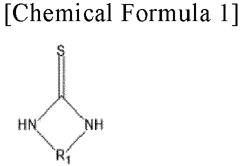

In Chemical Formula 1, R₁ is independently a C1-C3 alkyl.

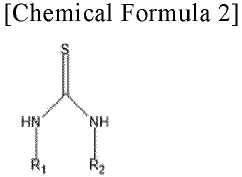

In Chemical Formula 2, R₁ and R₂ are each independently a hydrogen atom or a C1-C9 alkyl.

Another aspect of the present invention pertains to a secondary battery including (a) a cathode including a cathode active material capable of intercalating and deintercalating lithium, (b) an anode including an anode active material capable of intercalating and deintercalating lithium, (c) the electrolyte solution described above, and (d) a separator.

Hereinafter, a detailed description will be given of the present invention.

The non-aqueous electrolyte solution for a secondary battery according to the present invention includes (A) a lithium salt, (B) a non-aqueous organic solvent, and (C) at least one additive selected from the group consisting of a compound represented by Chemical Formula 1 and a compound represented by Chemical Formula 2 below.

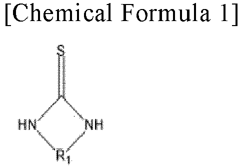

In Chemical Formula 1,
R₁ is independently a C1-C3 alkyl.

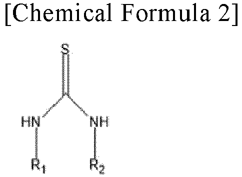

In Chemical Formula 2,
R₁ and R₂ are each independently a hydrogen atom or a C1-C9 alkyl.

In the present invention, the compound represented by Chemical Formula 1 is preferably 2-imidazolidinethione, which is a compound represented by Chemical Formula 1-1 below.

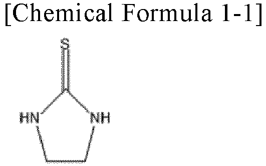

In the present invention, the compound represented by Chemical Formula 2 is preferably thiourea, which is a compound represented by Chemical Formula 2-1 below.

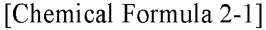

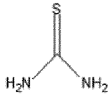

In the present invention, at least one lifespan prolonging additive or anode film forming additive selected from the group consisting of vinyl carbonate, vinyl ethylene carbonate, fluoroethylene carbonate, and tetrahydrofuro[3,2-b]furan-2,5-dione (also referred to as muconic lactone) may be further included.

In the present invention, at least one high-temperature performance enhancing additive selected from the group consisting of 1,3-propane sultone, 1,3-propene-1,3-sultone, ethylene sulfate, 1,4-butane sultone, 1,3-propanediol cyclic sulfate, 4,4'-bi-1,3,2-dioxathiolane-2,2,2',2'-tetraoxide, 1,3-divinyltetramethyldisiloxane, and 2,4,8,10-tetraoxa-3,9-dithiaspiro[5.5]undecane) (or referred to as 3,3,9,9-tetraoxide) may be further included.

In the present invention, at least one power enhancing additive selected from the group consisting of aromatic phosphate compounds, such as bis(triethylsilyl) sulfate, bis(trimethylsilyl) sulfate, trimethylsilyl ethenesulfonate, triethylsilyl ethenesulfonate, and tetraphenyl (propane-2,2-diylbis(4,1-phenylene)) bis(phosphate) may be further included.

In the present invention, at least one high-temperature performance and power enhancing additive selected from the group consisting of lithium difluorophosphate, lithium bis(oxalato)borate, lithium bis(fluorosulfonyl)imide, lithium bis(trifluoromethanesulfonyl)imide, cesium hexafluorophosphate, cesium bis(fluorosulfonyl)imide, cesium bis(trifluoromethanesulfonyl)imide, lithium difluoro(oxalato)borate, lithium tetrafluoro oxalato phosphate, lithium difluoro bis(oxalato) phosphate, and lithium bis(phosphorodifluoridate) triethylammonium ethenesulfonate may be further included.

In the present invention, the lithium salt used as the solute of the electrolyte may be at least one selected from the group consisting of LiPF₆, LiBF₄, LiSbF₆, LiAsF₆, LiClO₄, LiN(C₂F₅SO₂)₂, LiN(CF₃SO₂)₂, CF₃SO₃Li, and LiC(CF₃SO₂)₃. The concentration of the lithium salt is preferably set in the range of 0.1 M to 2.0 M, more preferably 0.7 M to 1.6 M. If the concentration thereof is less than 0.1 M, the conductivity of the electrolyte solution may decrease and the performance of the electrolyte solution may deteriorate, whereas if it exceeds 2.0 M, mobility of lithium ions may decrease due to an increase in the viscosity of the electrolyte solution. These lithium salts act as a source of lithium ions in the battery, enabling basic operation of the lithium secondary battery.

In the present invention, the non-aqueous organic solvent may be at least one selected from the group consisting of linear carbonate, cyclic carbonate, linear ester, and cyclic ester. Here, the linear carbonate may be at least one carbonate selected from the group consisting of dimethyl carbonate, diethyl carbonate, dipropyl carbonate, methyl propyl carbonate, ethyl propyl carbonate, ethyl methyl carbonate, and mixtures thereof, the cyclic carbonate may be at least one carbonate selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate (VC), vinyl ethylene carbonate, and fluoroethylene carbonate, the linear ester may be at least one ester selected from the group consisting of methyl propionate, ethyl propionate, propyl acetate, butyl acetate, and ethyl acetate, and the cyclic ester may be at least one ester selected from the group consisting of gamma-butyrolactone, caprolactone, and valerolactone. In the electrolyte solution according to an embodiment of the present invention, when the non-aqueous organic solvent is a mixed solvent of a linear carbonate solvent and a cyclic carbonate solvent, the linear carbonate solvent and the cyclic carbonate solvent may be mixed in a volume ratio of 1:9 to 9:1, preferably 1.5:1 to 4:1.

In the present invention, the amount of at least one additive selected from the group consisting of a compound represented by Chemical Formula 1 and a compound represented by Chemical Formula 2 may be 10 to 100,000 ppm, preferably 20 to 80,000 ppm, more preferably 50 to 50,000 ppm, based on the total amount of the electrolyte solution for a secondary battery. If the amount thereof is less than 10 ppm, high-temperature battery characteristics may be deteriorated, whereas if it exceeds 100,000 ppm, ionic conductivity may be lowered.

The electrolyte solution for a lithium ion secondary battery according to the present invention usually maintains stability in a temperature range of -20 to 50°C. The electrolyte solution of the present invention may be applied to lithium ion secondary batteries, lithium ion polymer batteries, and the like.

In the lithium secondary battery of the present invention, the cathode material may include lithium metal oxide such as LiCoO₂, LiNiO₂, LiMnO₂, LiMn₂O₄, or LiNi_{1-x-y}CoₓM_{y}O₂ (0≤x≤1, 0≤y≤1, 0≤x+y≤1, M is a metal such as Al, Sr, Mg, La, etc.), and the anode material may include crystalline or amorphous carbon, carbon composites, lithium metal, or lithium alloys. A lithium ion secondary battery is manufactured in a manner in which each active material is applied at an appropriate thickness and length onto a thin current collector, or is applied alone in a film form and wound or stacked along with a separator, which is an insulator, to form an electrode group, which is then placed in a can or similar container, followed by injection of a non-aqueous electrolyte solution containing trialkylsilyl sulfate and phosphite-based stabilizers. Here, the separator used may be resin such as polyethylene, polypropylene, etc.

A better understanding of the present invention may be obtained through the following examples. These examples are merely set forth to illustrate the present invention, and are not to be construed as limiting the scope of the present invention, as will be obvious to those skilled in the art.

### [Examples]

### Example 1

A cathode slurry was prepared in a manner in which LiNi_{0.8}Co_{0.1}Mn_{0.1}O₂ as a cathode active material, polyvinylidene fluoride (PVdF) as a binder, and carbon black as a conductive material were mixed in a weight ratio of 95.6:2.2:2.2 and then dispersed in N-methyl-2-pyrrolidone. This slurry was applied onto an aluminum foil having a thickness of 20 µm, dried, and rolled, thereby manufacturing a cathode.

An anode active material slurry was prepared in a manner in which natural graphite as an anode active material, acetylene black as a conductive material, and polyvinylidene fluoride (PVdF) as a binder were mixed in a weight ratio of 85:8:7 and then dispersed in N-methyl-2-pyrrolidone. This slurry was applied onto a copper foil having a thickness of 15 µm, dried, and rolled, thereby manufacturing an anode.

A film separator made of polyethylene (PE) with a thickness of 20 µm was stacked between the electrodes manufactured above, wound, and pressed to form a cell using a pouch having a size of 6 mm in thickness x 35 mm in width x 60 mm in length, and the following non-aqueous electrolyte solution was injected thereto, ultimately manufacturing a lithium secondary battery (NCM811/AG (890 mAh)).

The electrolyte solution was prepared by dissolving LiPF₆ at 1.0 M in a mixed solvent of ethylene carbonate (EC) and ethylmethyl carbonate (EMC) (1:1 (v/v)) and then adding 0.02 wt% of 2-imidazolidinethione thereto.

### Examples 2 to 28

These examples were performed in the same manner as in Example 1, with the exception that electrolyte solutions and 2-imidazolidinethione or thiourea were added in the amounts shown in Tables 1 to 5 below.

**[Table 1]**

| Additive (wt%) | | | Example 1 | Example 2 | Example 3 | Example 4 | Example 5 | Example 6 |
|---|---|---|---|---|---|---|---|---|
| 2-imidazolidinethione 1.0 M LiPF₆ in EC/EMC=1/1 (v/v) | | | 0.02 | 0.1 | 0.3 | | | |
| 2-imidazolidinethione 1.0 M LiPF₆ in EC/DMC=1/1 (v/v) | | | | | | 0.02 | 0.1 | 0.3 |
| Room-temperature (25°C) thermal stability evaluation | APHA(-) | Beginning | 3 | 2 | 2 | 3 | 3 | 2 |
| | | After 1 month | 6 | 6 | 4 | 6 | 6 | 4 |
| High-temperature (60°C) thermal stability evaluation | APHA(-) | Beginning | 3 | 2 | 2 | 3 | 3 | 2 |
| | | After 1 month | 8 | 8 | 5 | 9 | 8 | 5 |

**[Table 2]**

| Additive (wt%) | | | Example 7 | Example 8 | Example 9 | Example 10 | Example 11 | Example 12 |
|---|---|---|---|---|---|---|---|---|
| 2-imidazolidinethione 1.0 M LiPF₆ in EC/DEC=1/1 (v/v) | | | 0.02 | 0.1 | 0.3 | | | |
| 2-imidazolidinethione 1.0 M LiPF₆ in EC/PC=1/1 (v/v) | | | | | | 0.02 | 0.1 | 0.3 |
| Room-temperature (25°C) thermal stability evaluation | APHA(-) | Beginning | 3 | 3 | 3 | 7 | 7 | 4 |
| | | After 1 month | 5 | 5 | 4 | 9 | 9 | 7 |
| High-temperature (60°C) thermal stability evaluation | APHA(-) | Beginning | 3 | 3 | 3 | 7 | 7 | 4 |
| | | After 1 month | 7 | 7 | 5 | 9 | 9 | 5 |

**[Table 3]**

| Additive (wt%) | | | Example 13 | Example 14 | Example 15 | Example 16 | Example 17 | Example 18 |
|---|---|---|---|---|---|---|---|---|
| 2-imidazolidinethione 1.0 M LiPF₆ in EC/EP=1/1 (v/v) | | | 0.02 | 0.1 | 0.3 | | | |
| 2-imidazolidinethione 1.0 M LiPF₆ in EC/EA=1/1 (v/v) | | | | | | 0.02 | 0.1 | 0.3 |
| Room-temperature (25°C) thermal stability evaluation | APHA(-) | Beginning | 3 | 3 | 2 | 3 | 3 | 2 |
| | | After 1 month | 5 | 5 | 4 | 6 | 6 | 5 |
| High-temperature (60°C) thermal stability evaluation | APHA(-) | Beginning | 3 | 3 | 2 | 3 | 3 | 2 |
| | | After 1 month | 8 | 7 | 6 | 9 | 7 | 5 |

**[Table 4]**

| Additive (wt%) | | | Example 19 | Example 20 | Example 21 |
|---|---|---|---|---|---|
| 2-imidazolidinethione 0.5 M LiPF₆, 0.5 M LiFSI in EC/EMC=1/1 (v/v) | | | 0.02 | 0.1 | 0.3 |
| Room-temperature (25°C) thermal stability evaluation | APHA(-) | Beginning | 4 | 4 | 2 |
| | | After 1 month | 7 | 7 | 6 |
| High-temperature (60°C) thermal stability evaluation | APHA(-) | Beginning | 4 | 4 | 2 |
| | | After 1 month | 11 | 9 | 6 |

**[Table 5]**

| Additive (wt%) | Example 22 | Example 23 | Example 24 | Example 25 | Example 26 | Example 27 | Example 28 | | |
|---|---|---|---|---|---|---|---|---|---|
| Thiourea 1.0 M LiPF₆ in EC/EP=1/1 (v/v) | 0.1 | | | | | | | | |
| Thiourea 1.0 M LiPF₆ in EC/DMC=1/1 (v/v) | | 0.1 | | | | | | | |
| Thiourea 1.0 M LiPF₆ in EC/DEC=1/1 (v/v) | | | 0.1 | | | | | | |
| Thiourea | | | | 0.1 | | | | | |
| 1.0 M LiPF₆ in EC/PC=1/1 (v/v) | | | | | | | | | |
| Thiourea 1.0 M LiPF₆ in EC/EP=1/1 (v/v) | | | | | | | 0.1 | | |
| Thiourea 1.0 M LiPF₆ in EC/EA=1/1 (v/v) | | | | | | | | 0.1 | |
| Thiourea 0.5 M LiPF₆, 0.5 M LiFSI in EC/EMC=1/1 (v/v) | | | | | | | | | 0.1 |
| Room-temperature (25°C) thermal stability evaluation | APHA(-) | Beginning | 3 | 4 | 4 | 8 | 4 | 4 | 5 |
| | | After 1 month | 7 | 7 | 6 | 10 | 6 | 7 | 8 |
| High-temperature (60°C) thermal stability evaluation | APHA(-) | Beginning | 3 | 4 | 4 | 8 | 4 | 4 | 5 |
| | | After 1 month | 9 | 9 | 8 | 10 | 8 | 8 | 10 |

### Comparative Examples 1 to 7

Respective lithium secondary batteries were manufactured in the same manner as above, with the exception that 2-imidazolidinethione was not added to electrolyte solutions as shown in Table 6 below.

**[Table 6]**

| Additive (wt%) | Com. Example 1 | Com. Example 2 | Com. Example 3 | Com. Example 4 | Com. Example 5 | Com. Example 6 | | Com. Example 7 | |
|---|---|---|---|---|---|---|---|---|---|
| 2 -imidazo lidinethio ne/thiourea 1.0 M LiPF₆ in EC/EMC=1/1 (v/v) | 0 | | | | | | | | |
| 2 -imidazo lidinethio ne/thiourea 1.0 M LiPF₆ in EC/DMC=1/1 (v/v) | | 0 | | | | | | | |
| 2 -imidazo lidinethio ne/thiourea 1.0 M LiPF₆ in EC/DEC=1/1 (v/v) | | | 0 | | | | | | |
| 2 -imidazo lidinethio ne/thiourea 1.0 M LiPF₆ in EC/PC=1/1 (v/v) | | | | 0 | | | | | |
| 2 -imidazo lidinethio ne/thiourea 1.0 M LiPF₆ in EC/EP=1/1 (v/v) | | | | | 0 | | | | |
| 2 -imidazo lidinethio ne/thiourea 1.0 M LiPF₆ in EC/EA=1/1 (v/v) | | | | | | 0 | | | |
| 2 -imidazo lidinethio ne/thiourea | | | | | | | | 0 | |
| 0.5 M LiPF₆, 0.5 M LiFSI in EC/EMC=1/1 (v/v) | | | | | | | | | |
| Room-temperature (25°C) thermal stability evaluation | APHA(-) | Beginning | 10 | 12 | 10 | 15 | 11 | 12 | 15 |
| | | After 1 month | 35 | 41 | 31 | 42 | 36 | 37 | 46 |
| High-temperature (60°C) thermal stability evaluation | APHA(-) | Beginning | 10 | 12 | 10 | 15 | 11 | 12 | 15 |
| | | After 1 month | 82 | 90 | 79 | 101 | 78 | 80 | 107 |

### Examples 29 to 73

These examples were performed in the same manner as in Example 2, with the exception that a lifespan prolonging additive, a high-temperature performance enhancing additive, a power enhancing additive, or a high-temperature performance and power enhancing additive was further added in the amounts shown in Tables 7 to 14 below.

**[Table 7]**

| Additive (wt%) | | | Example 2 | Example 29 | Example 30 | Example 31 | Example 32 | Example 33 |
|---|---|---|---|---|---|---|---|---|
| 2-imidazolidinethione 1.0 M LiPF₆ in EC/EMC=1/1 (v/v) | | | 0.1 | 0.1 | 0.1 | 0.1 | 0.1 | 0.1 |
| Chemical Formula A-1 | | | | 1 | | | | |
| Chemical Formula A-2 | | | | | 1 | | | |
| Chemical Formula A-3 | | | | | | 1 | | |
| Chemical Formula A-4 | | | | | | | 1 | |
| Chemical Formula B-1 | | | | | | | | 2 |
| Chemical Formula B-2 | | | | | | | | |
| Chemical Formula B-3 | | | | | | | | |
| Chemical Formula B-4 | | | | | | | | |
| Chemical Formula B-5 | | | | | | | | |
| Chemical Formula B-6 | | | | | | | | |
| Chemical Formula B-7 | | | | | | | | |
| Room-temperature (25°C) thermal stability evaluation | APHA(-) | Beginning | 6 | 6 | 8 | 9 | 6 | 6 |
| | | After 1 month | 2 | 3 | 4 | 5 | 2 | 2 |
| High-temperature | APHA(-) | Beginning | 6 | 6 | 8 | 9 | 6 | 6 |
| (60°C) thermal stability evaluation | | After 1 month | 3 | 3 | 6 | 7 | 6 | 6 |
| High-temperature storage evaluation (70°C, 1 week) | AC-IR | Change (%) | 80.5% | 68.6% | 69.7% | 73.9% | 74.6% | 75.2% |
| | Retention capacity | Capacity retention (%) | 70.6% | 78.8% | 81.4% | 75.5% | 74.6% | 82.7% |
| | Recovery capacity | Capacity recovery (%) | 75.7% | 83.6% | 85.5% | 81.2% | 80.6% | 88.8% |

**[Table 8]**

| Additive (wt%) | | | Example 34 | Example 35 | Example 36 | Example 37 | Example 38 | Example 39 |
|---|---|---|---|---|---|---|---|---|
| 2-imidazolidinethione 1.0 M LiPF₆ in EC/EMC=1/1 (v/v) | | | 0.1 | 0.1 | 0.1 | 0.1 | 0.1 | 0.1 |
| Chemical Formula A-1 | | | | | | | | |
| Chemical Formula A-2 | | | | | | | | |
| Chemical Formula A-3 | | | | | | | | |
| Chemical Formula A-4 | | | | | | | | |
| Chemical Formula B-1 | | | | | | | | |
| Chemical Formula B-2 | | | 2 | | | | | |
| Chemical Formula B-3 | | | | 2 | | | | |
| Chemical Formula B-4 | | | | | 2 | | | |
| Chemical Formula B-5 | | | | | | 2 | | |
| Chemical Formula B-6 | | | | | | | 2 | |
| Chemical Formula B-7 | | | | | | | | 2 |
| Room-temperature (25°C) thermal stability evaluation | APHA(-) | Beginning | 7 | 9 | 6 | 6 | 6 | 6 |
| | | After 1 month | 3 | 5 | 2 | 2 | 3 | 3 |
| High-temperature (60°C) thermal stability evaluation | APHA(-) | Beginning | 7 | 9 | 6 | 6 | 6 | 6 |
| | | After 1 month | 6 | 7 | 6 | 6 | 6 | 6 |
| High-temperature storage evaluation (70°C, 1 week) | AC-IR | Change (%) | 80.2% | 76.1% | 78.7% | 74.4% | 75.5% | 74.8% |
| | Retention capacity | Capacity retention (%) | 73.4% | 82.6% | 74.4% | 80.5% | 79.8% | 81.1% |
| | Recovery capacity | Capacity recovery (%) | 76.8% | 87.4% | 79.6% | 86.6% | 83.3% | 89.2% |

**[Table 9]**

| Additive (wt%) | | | Example 40 | Example 41 | Example 42 | Example 43 | Example 44 | Example 45 |
|---|---|---|---|---|---|---|---|---|
| 2-imidazolidinethione 1.0 M LiPF₆ in EC/EMC=1/1 (v/v) | | | 0.1 | 0.1 | 0.1 | 0.1 | 0.1 | 0.1 |
| Chemical Formula C-1 | | | 1 | | | | | |
| Chemical Formula C-2 | | | | 1 | | | | |
| Chemical Formula C-3 | | | | | 1 | | | |
| Chemical Formula C-4 | | | | | | 1 | | |
| Chemical Formula C-5 | | | | | | | 1 | |
| Chemical Formula D-1 | | | | | | | | 1 |
| Chemical Formula D-2 | | | | | | | | |
| Chemical Formula D-3 | | | | | | | | |
| Chemical Formula D-4 | | | | | | | | |
| Chemical Formula D-5 | | | | | | | | |
| Chemical Formula D-6 | | | | | | | | |
| Room-temperature (25°C) thermal stability evaluation | APHA(-) | Beginning | 7 | 9 | 9 | 6 | 6 | 6 |
| | | After 1 month | 3 | 5 | 6 | 2 | 3 | 2 |
| High-temperature (60°C) thermal stability evaluation | APHA(-) | Beginning | 7 | 9 | 9 | 6 | 6 | 6 |
| | | After 1 month | 6 | 7 | 7 | 6 | 4 | 3 |
| High-temperature storage evaluation (70°C, 1 week) | AC-IR | Change (%) | 61.5% | 68.7% | 57.8% | 60.5% | 69.3% | 35.6% |
| | Retention capacity | Capacity retention (%) | 77.7% | 74.7% | 81.4% | 78.4% | 74.2% | 85.6% |
| | Recovery capacity | Capacity recovery (%) | 85.9% | 83.1% | 86.6% | 86.2% | 88.6% | 94.5% |

**[Table 10]**

| Additive (wt%) | | | Example 46 | Example 47 | Example 48 | Example 49 | Example 50 |
|---|---|---|---|---|---|---|---|
| 2-imidazolidinethione 1.0 M LiPF₆ in EC/EMC=1/1 (v/v) | | | 0.1 | 0.1 | 0.1 | 0.1 | 0.1 |
| Chemical Formula C-1 | | | | | | | |
| Chemical Formula C-2 | | | | | | | |
| Chemical Formula C-3 | | | | | | | |
| Chemical Formula C-4 | | | | | | | |
| Chemical Formula D-1 | | | | | | | |
| Chemical Formula D-2 | | | 1 | | | | |
| Chemical Formula D-3 | | | | 1 | | | |
| Chemical Formula D-4 | | | | | 1 | | |
| Chemical Formula D-5 | | | | | | 1 | |
| Chemical Formula D-6 | | | | | | | 1 |
| Room-temperature (25°C) thermal stability evaluation | APHA(-) | Beginning | 6 | 6 | 6 | 6 | 6 |
| | | After 1 month | 2 | 2 | 2 | 2 | 2 |
| High-temperature (60°C) thermal stability evaluation | APHA(-) | Beginning | 6 | 6 | 6 | 6 | 6 |
| | | After 1 month | 3 | 4 | 4 | 3 | 3 |
| High-temperature storage evaluation (70°C, 1 week) | AC-IR | Change (%) | 48.7% | 43.5% | 41.4% | 40.9% | 38.2% |
| | Retention capacity | Capacity retention (%) | 77.7% | 79.2% | 83.6% | 84.7% | 85.5% |
| | Recovery capacity | Capacity recovery (%) | 85.6% | 87.6% | 91.1% | 92.1% | 93.4% |

**[Table 11]**

| Additive (wt%) | | | Example 51 | Example 52 | Example 53 | Example 54 | Example 55 | Example 56 |
|---|---|---|---|---|---|---|---|---|
| Thiourea 1.0 M LiPF₆ in EC/EMC=1/1 (v/v) | | | 0.1 | 0.1 | 0.1 | 0.1 | 0.1 | 0.1 |
| Chemical Formula A-1 | | | | 1 | | | | |
| Chemical Formula A-2 | | | | | 1 | | | |
| Chemical Formula A-3 | | | | | | 1 | | |
| Chemical Formula A-4 | | | | | | | 1 | |
| Chemical Formula B-1 | | | | | | | | 2 |
| Chemical Formula B-2 | | | | | | | | |
| Chemical Formula B-3 | | | | | | | | |
| Chemical Formula B-4 | | | | | | | | |
| Chemical Formula B-5 | | | | | | | | |
| Chemical Formula B-6 | | | | | | | | |
| Chemical Formula B-7 | | | | | | | | |
| Room-temperature (25°C) thermal stability evaluation | APHA(-) | Beginning | 7 | 7 | 9 | 10 | 7 | 7 |
| | | After 1 month | 3 | 4 | 5 | 6 | 3 | 3 |
| High-temperature (60°C) thermal stability evaluation | APHA(-) | Beginning | 7 | 7 | 9 | 10 | 7 | 7 |
| | | After 1 month | 4 | 4 | 7 | 8 | 7 | 7 |
| High-temperature storage evaluation (70°C, 1 week) | AC-IR | Change (%) | 82.5% | 70.6% | 71.7% | 75.9% | 76.6% | 77.2% |
| | Retention capacity | Capacity retention (%) | 69.1% | 77.3% | 79.9% | 74.0% | 73.1% | 81.2% |
| | Recovery capacity | Capacity recovery (%) | 74.2% | 82.1% | 84.0% | 79.7% | 79.1% | 87.3% |

**Table 12]**

| Additive (wt%) | Example 57 | Example 58 | Example 59 | Example 60 | Example 61 | | Example 62 | |
|---|---|---|---|---|---|---|---|---|
| Tthiourea | 0.1 | 0.1 | 0.1 | 0.1 | 0.1 | | 0.1 | |
| 1.0 M LiPF₆ in EC/EMC=1/1 (v/v) | | | | | | | | |
| Chemical Formula A-1 | | | | | | | | |
| Chemical Formula A-2 | | | | | | | | |
| Chemical Formula A-3 | | | | | | | | |
| Chemical Formula A-4 | | | | | | | | |
| Chemical Formula B-1 | | | | | | | | |
| Chemical Formula B-2 | | | 2 | | | | | |
| Chemical Formula B-3 | | | | 2 | | | | |
| Chemical Formula B-4 | | | | | 2 | | | |
| Chemical Formula B-5 | | | | | | 2 | | |
| Chemical Formula B-6 | | | | | | | 2 | |
| Chemical Formula B-7 | | | | | | | | 2 |
| Room-temperature (25°C) thermal stability evaluation | APHA(-) | Beginning | 8 | 10 | 7 | 7 | 7 | 7 |
| | | After 1 month | 4 | 6 | 3 | 3 | 4 | 4 |
| High-temperature (60°C) thermal stability evaluation | APHA(-) | Beginning | 8 | 10 | 7 | 7 | 7 | 7 |
| | | After 1 month | 7 | 8 | 7 | 7 | 7 | 7 |
| High-temperature storage evaluation (70°C, 1 week) | AC-IR | Change (%) | 82.2% | 78.1% | 80.7% | 76.4% | 77.5% | 76.8% |
| | Retention capacity | Capacity retention (%) | 71.9% | 81.1% | 72.9% | 79.0% | 78.3% | 79.6% |
| | Recovery capacity | Capacity recovery (%) | 75.3% | 85.9% | 78.1% | 85.1% | 81.8% | 87.7% |

**[Table 13]**

| Additive (wt%) | | | Example 63 | Example 64 | Example 65 | Example 66 | Example 67 | Example 68 |
|---|---|---|---|---|---|---|---|---|
| Thiourea 1.0 M LiPF₆ in EC/EMC=1/1 (v/v) | | | 0.1 | 0.1 | 0.1 | 0.1 | 0.1 | |
| Chemical Formula C-1 | | | 1 | | | | | |
| Chemical Formula C-2 | | | | 1 | | | | |
| Chemical Formula C-3 | | | | | 1 | | | |
| Chemical Formula C-4 | | | | | | 1 | | |
| Chemical Formula C-5 | | | | | | | 1 | |
| Chemical Formula D-1 | | | | | | | | 1 |
| Chemical Formula D-2 | | | | | | | | |
| Chemical Formula D-3 | | | | | | | | |
| Chemical Formula D-4 | | | | | | | | |
| Chemical Formula D-5 | | | | | | | | |
| Chemical Formula D-6 | | | | | | | | |
| Room-temperature (25°C) thermal stability | APHA(-) | Beginning | 8 | 10 | 10 | 7 | 7 | 7 |
| | | After 1 month | 4 | 6 | 7 | 3 | 4 | 3 |
| evaluation | | | | | | | | |
| High-temperature (60°C) thermal stability evaluation | APHA(-) | Beginning | 8 | 10 | 10 | 7 | 7 | 7 |
| | | After 1 month | 7 | 8 | 8 | 7 | 5 | 4 |
| High-temperature storage evaluation (70°C, 1 week) | AC-IR | Change (%) | 63.5% | 70.7% | 59.8% | 62.5% | 71.3% | 37.6% |
| | Retention capacity | Capacity retention (%) | 76.2% | 73.2% | 79.9% | 76.9% | 72.2% | 84.1% |
| | Recovery capacity | Capacity recovery (%) | 84.4% | 81.6% | 85.1% | 84.7% | 86.6% | 93.0% |

**[Table 14]**

| Additive (wt%) | | | Example 69 | Example 70 | Example 71 | Example 72 | Example 73 |
|---|---|---|---|---|---|---|---|
| Thiourea 1.0 M LiPF₆ in EC/EMC=1/1 (v/v) | | | 0.1 | 0.1 | 0.1 | 0.1 | 0.1 |
| Chemical Formula C-1 | | | | | | | |
| Chemical Formula C-2 | | | | | | | |
| Chemical Formula C-3 | | | | | | | |
| Chemical Formula C-4 | | | | | | | |
| Chemical Formula D-1 | | | | | | | |
| Chemical Formula D-2 | | | 1 | | | | |
| Chemical Formula D-3 | | | | 1 | | | |
| Chemical Formula D-4 | | | | | 1 | | |
| Chemical Formula D-5 | | | | | | 1 | |
| Chemical Formula D-6 | | | | | | | 1 |
| Room-temperature (25°C) thermal stability evaluation | APHA(-) | Beginning | 7 | 7 | 7 | 7 | 7 |
| | | After 1 month | 3 | 3 | 3 | 3 | 3 |
| High-temperature (60°C) thermal stability evaluation | APHA(-) | Beginning | 7 | 7 | 7 | 7 | 7 |
| | | After 1 month | 4 | 5 | 5 | 4 | 4 |
| High-temperature storage evaluation (70°C, 1 week) | AC-IR | Change (%) | 50.7% | 45.5% | 43.4% | 42.9% | 40.2% |
| | Retention capacity | Capacity retention (%) | 76.2% | 77.7% | 82.1% | 83.2% | 84.0% |
| | Recovery capacity | Capacity recovery (%) | 84.1% | 86.1% | 89.6% | 90.6% | 91.9% |

### Comparative Examples 8 to 29

These comparative examples were performed in the same manner as in Comparative Example 1, with the exception that a lifespan prolonging additive, a high-temperature performance enhancing additive, a power enhancing additive, or a high-temperature performance and power enhancing additive was further added in the amounts shown in Tables 15 to 18 below.

**[Table 15]**

| Additive (wt%) | | | Com. Example 1 | Com. Example 8 | Com. Example 9 | Com. Example 10 | Com. Example 11 | Com. Example 12 |
|---|---|---|---|---|---|---|---|---|
| 2-imidazolidinethione/thiourea 1.0 M LiPF₆ in EC/EMC=1/1 (v/v) | | | | | | | | |
| Chemical Formula A-1 | | | | 1 | | | | |
| Chemical Formula A-2 | | | | | 1 | | | |
| Chemical Formula A-3 | | | | | | 1 | | |
| Chemical Formula A-4 | | | | | | | 1 | |
| Chemical Formula B-1 | | | | | | | | 2 |
| Chemical Formula B-2 | | | | | | | | |
| Chemical Formula B-3 | | | | | | | | |
| Chemical Formula B-4 | | | | | | | | |
| Chemical Formula B-5 | | | | | | | | |
| Chemical Formula B-6 | | | | | | | | |
| Chemical Formula B-7 | | | | | | | | |
| Room-temperature (25°C) thermal stability evaluation | APHA(-) | Beginning | 10 | 10 | 13 | 15 | 10 | 11 |
| | | After 1 month | 35 | 38 | 43 | 50 | 38 | 39 |
| High-temperature (60°C) thermal stability evaluation | APHA(-) | Beginning | 10 | 10 | 13 | 15 | 10 | 11 |
| | | After 1 month | 82 | 88 | 90 | 101 | 90 | 100 |
| High-temperature storage evaluation (70°C, 1 week) | AC-IR | Change (%) | 85.2% | 70.1% | 71.2% | 76.5% | 77.5% | 80.7% |
| | Retention capacity | Capacity retention (%) | 64.2% | 75.9% | 78.3% | 72.2% | 72.4% | 80.7% |
| | Recovery capacity | Capacity recovery (%) | 68.7% | 80.6% | 82.2% | 78.8% | 77.6% | 85.5% |

**[Table 16]**

| Additive (wt%) | | | Com. Example 13 | Com. Example 14 | Com. Example 15 | Com. Example 16 | Com. Example 17 | Com. Example 18 |
|---|---|---|---|---|---|---|---|---|
| 2-imidazolidinethione/thiourea 1.0 M LiPF₆ in EC/EMC=1/1 (v/v) | | | | | | | | |
| Chemical Formula A-1 | | | | | | | | |
| Chemical Formula A-2 | | | | | | | | |
| Chemical Formula A-3 | | | | | | | | |
| Chemical Formula A-4 | | | | | | | | |
| Chemical Formula B-1 | | | | | | | | |
| Chemical Formula B-2 | | | 2 | | | | | |
| Chemical Formula B-3 | | | | 2 | | | | |
| Chemical Formula B-4 | | | | | 2 | | | |
| Chemical Formula B-5 | | | | | | 2 | | |
| Chemical Formula B-6 | | | | | | | 2 | |
| Chemical Formula B-7 | | | | | | | | 2 |
| Room-temperature (25°C) thermal stability evaluation | APHA(-) | Beginning | 12 | 15 | 10 | 10 | 11 | 11 |
| | | After 1 month | 44 | 50 | 46 | 40 | 39 | 39 |
| High-temperature (60°C) thermal stability evaluation | APHA(-) | Beginning | 12 | 15 | 10 | 10 | 11 | 11 |
| | | After 1 month | 110 | 130 | 105 | 100 | 105 | 95 |
| High-temperature storage evaluation (70°C, 1 week) | AC-IR | Change (%) | 85.2% | 80.9% | 83.1% | 78.9% | 80.2% | 79.9% |
| | Retention capacity | Capacity retention (%) | 70.8% | 79.7% | 71.1% | 78.6% | 77.7% | 79.9% |
| | Recovery capacity | Capacity recovery (%) | 72.1% | 84.3% | 74.3% | 83.9% | 80.2% | 86.4% |

**[Table 17]**

| Additive (wt%) | Com. Example 19 | Com. Example 20 | Com. Example 21 | Com. Example 22 | Com. Example 23 | Com. Example 24 | | |
|---|---|---|---|---|---|---|---|---|
| 2 -imidazo lidinethio ne/thiourea 1.0 M LiPF₆ in EC/EMC=1/1 (v/v) | | | | | | | | |
| Chemical Formula C-1 | 1 | | | | | | | |
| Chemical Formula C-2 | | 1 | | | | | | |
| Chemical Formula C-3 | | | 1 | | | | | |
| Chemical Formula C-4 | | | | 1 | | | | |
| Chemical Formula C-5 | | | | | 1 | | | |
| Chemical Formula D-1 | | | | | | 1 | | |
| Chemical Formula D-2 | | | | | | | | |
| Chemical Formula D-3 | | | | | | | | |
| Chemical Formula D-4 | | | | | | | | |
| Chemical Formula D-5 | | | | | | | | |
| Chemical Formula D-6 | | | | | | | | |
| Room-temperature (25°C) thermal stability evaluation | APHA(-) | Beginning | 12 | 10 | 15 | 15 | 13 | 10 |
| | | After 1 month | 50 | 52 | 56 | 60 | 40 | 36 |
| High-temperature (60°C) thermal stability evaluation | APHA(-) | Beginning | 12 | 10 | 15 | 15 | 13 | 10 |
| | | After 1 month | 130 | 150 | 140 | 160 | 97 | 78 |
| High-temperature storage evaluation (70°C, 1 week) | AC-IR | Change (%) | 66.0% | 70.3% | 60.1% | 63.2% | 70.4% | 40.8% |
| | Retention capacity | Capacity retention (%) | 74.1% | 72.4% | 78.8% | 74.6% | 72.1% | 83.1% |
| | Recovery capacity | Capacity recovery (%) | 82.6% | 81.6% | 83.4% | 82.8% | 81.7% | 90.2% |

**[Table 18]**

| Additive (wt%) | | | Com. Example 25 | Com. Example 26 | Com. Example 27 | Com. Example 28 | Com. Example 29 |
|---|---|---|---|---|---|---|---|
| 2 -imidazo lidinethio ne/thiourea 1.0 M LiPF₆ in EC/EMC=1/1 (v/v) | | | | | | | |
| Chemical Formula C-1 | | | | | | | |
| Chemical Formula C-2 | | | | | | | |
| Chemical Formula C-3 | | | | | | | |
| Chemical Formula C-4 | | | | | | | |
| Chemical Formula C-5 | | | | | | | |
| Chemical Formula D-1 | | | | | | | |
| Chemical Formula D-2 | | | 1 | | | | |
| Chemical Formula D-3 | | | | 1 | | | |
| Chemical Formula D-4 | | | | | 1 | | |
| Chemical Formula D-5 | | | | | | 1 | |
| Chemical Formula D-6 | | | | | | | 1 |
| Room-temperature (25°C) thermal stability evaluation | APHA(-) | Beginning | 10 | 10 | 10 | 10 | 10 |
| | | After 1 month | 40 | 39 | 38 | 38 | 38 |
| High-temperature (60°C) thermal stability evaluation | APHA(-) | Beginning | 10 | 10 | 10 | 10 | 10 |
| | | After 1 month | 88 | 90 | 80 | 82 | 80 |
| High-temperature storage evaluation (70°C, 1 week) | AC-IR | Change (%) | 50.9% | 48.6% | 46.7% | 45.6% | 42.3% |
| | Retention capacity | Capacity retention (%) | 73.9% | 75.2% | 80.1% | 81.1% | 83.4% |
| | Recovery capacity | Capacity recovery (%) | 82.4% | 84.6% | 89.6% | 89.9% | 91.8% |

Note) Chemical Formula A-1: vinyl carbonate
Chemical Formula A-2: vinyl ethylene carbonate
Chemical Formula A-3: fluoroethylene carbonate
Chemical Formula A-4: muconic lactone or tetrahydrofuro[3,2-b]furan-2,5-dione
Chemical Formula B-1: 1,3-propane sultone
Chemical Formula B-2: 1,3-propene-1,3-sultone
Chemical Formula B-3: ethylene sulfate
Chemical Formula B-4: 1,4-butane sultone
Chemical Formula B-5: 1,3-propanediol cyclic sulfate
Chemical Formula B-6: 4,4'-bi-1,3,2-dioxathiolane- 2,2,2',2'-tetraoxide
Chemical Formula B-7: 2,4,8,10-tetraoxa-3,9-dithiaspiro[5,5]undecane or 3,3,9,9-tetraoxide
Chemical Formula C-1: bis(triethylsilyl) sulfate
Chemical Formula C-2: bis(trimethylsilyl) sulfate
Chemical Formula C-3: trimethylsilyl ethenesulfonate
Chemical Formula C-4: triethylsilyl ethenesulfonate
Chemical Formula C-5: tetraphenyl (propane-2,2-diylbis(4,1-phenylene)) bis(phosphate)
Chemical Formula D-1: lithium difluorophosphate
Chemical Formula D-2: lithium bis(oxalato)borate
Chemical Formula D-3: lithium bis(fluorosulfonyl)imide
Chemical Formula D-4: lithium difluoro(oxalato)borate
Chemical Formula D-5: lithium tetrafluoro oxalato phosphate
Chemical Formula D-6: lithium difluoro bis(oxalato) phosphate

### Property Evaluation 1: Evaluation of room-temperature thermal stability

Thermal stability of the manufactured battery was measured at 25°C for 1 month at weekly intervals using a colorimeter (GNB Tech). APHA levels were represented at the beginning and after 1 month.

### Property Evaluation 2: Evaluation of high-temperature thermal stability

Thermal stability was measured at 60°C for 1 week at daily intervals using a colorimeter (GNB Tech). APHA levels were represented at the beginning and after 1 week.

### Property Evaluation 3: Evaluation of high-temperature storage

1) Internal resistance (AC-IR): After charging the manufactured battery to 4.2 V at 1C, internal resistance (AC-IR) was measured using a resistance meter (HIOKI, Japan), and the battery was charged to 4.2 V at 1C and then stored at a high temperature (70°C) for 7 days, followed by charging to 4.2 V at 1C and discharging at 1C twice, and internal resistance (AC-IR) was then measured using a resistance meter (HIOKI, Japan) after storage at a high temperature (70°C).
2) Retention, Recovery capacity: The battery was charged to 4.2 V at 1C, stored at a high temperature (70°C) for 7 days, and then discharged to 2.75 V at 1C, and retention capacity (discharge capacity) was measured, and also, the battery was charged again to 4.2 V at 1C and then discharged to 2.75 V at 1C, after which recovery capacity (discharge capacity) was measured and represented as a percentage relative to the initial discharge capacity.

As shown in Tables 1 to 18, the electrolyte solutions of Examples 1 to 73 of the present invention exhibited enhanced lifespan and high-temperature storage evaluation results compared to Comparative Examples 1 to 29 in room-temperature and high-temperature thermal stability evaluation and high-temperature storage evaluation.

As is apparent from Examples of the present invention, the additive of the present invention is effective at stabilizing the non-aqueous electrolyte solution, thus suppressing generation of byproducts in the electrolyte solution by virtue of stabilization of the non-aqueous electrolyte solution, thereby (1) preventing discoloration due to decomposition of the electrolyte solution and (2) improving battery internal resistance characteristics and increasing high-temperature storage efficiency (capacity retention/recovery).

As shown in Tables 1 to 4, the non-aqueous electrolyte solutions in which 2-imidazolidinethione was added according to Examples 1 to 21 of the present invention exhibited very low or almost no color change at room temperature and high temperature compared to Comparative Examples 1 to 7 of Table 6 in which 2-imidazolidinethione was not added. Moreover, the color change was confirmed to significantly decrease with an increase in the amount of 2-imidazolidinethione.

In addition, as shown in Table 5, the non-aqueous electrolyte solutions in which thiourea was added according to Examples 22 to 28 of the present invention exhibited very low or almost no color change at room temperature and high temperature compared to Comparative Examples 1 to 7 of Table 6 in which thiourea was not added.

As shown in Table 7, the electrolyte solution of Example 2 of the present invention in which 0.1 wt% of 2-imidazolidinethione was added exhibited a very low color change at room temperature and high temperature compared to Comparative Example 1 of Table 15, and manifested superior performance in battery internal resistance and high-temperature storage efficiency evaluation. As in Examples 29 to 50, when the lifespan prolonging additive, the high-temperature performance enhancing additive, the power enhancing additive, or the high-temperature performance and power enhancing additive was further added, battery performance was further enhanced. Moreover, the electrolyte solutions of Examples 29 to 50 exhibited a very low color change at room temperature and high temperature compared to Comparative Examples 8 to 29 in which 2-imidazolidinethione was not added, and also, battery internal resistance was improved by about 5 to 45%, and capacity retention and recovery after storage at a high temperature were increased by about 3 to 15%.

Similarly, as shown in Table 11, the electrolyte solution of Example 51 of the present invention in which 0.1 wt% of thiourea was added exhibited a very low color change at room temperature and high temperature compared to Comparative Example 1 of Table 15, and also showed superior performance in battery internal resistance and high-temperature storage efficiency evaluation. As in Examples 52 to 73, when the lifespan prolonging additive, the high-temperature performance enhancing additive, the power enhancing additive, or the high-temperature performance and power enhancing additive was further added, battery performance was further enhanced. Also, the electrolyte solutions of Examples 52 to 73 exhibited a very low color change at room temperature and high temperature compared to Comparative Examples 8 to 29 in which thiourea was not added, and battery internal resistance was improved by about 2 to 45%, and capacity retention and recovery after storage at a high temperature were increased by about 3 to 15%.

### [industrial Applicability]

According to the present invention, a non-aqueous electrolyte solution is stabilized by adding a compound of Chemical Formula 1 or Chemical Formula 2 thereto, thus suppressing generation of byproducts in the electrolyte solution, thereby preventing discoloration due to decomposition of the electrolyte solution, and improving battery internal resistance characteristics and increasing high-temperature storage efficiency (capacity retention/recovery).

Having described specific parts of the present invention in detail above, it will be obvious to those skilled in the art that these specific descriptions are only preferred embodiments, and the scope of the present invention is not limited thereby. Accordingly, the substantial scope of the present invention will be defined by the appended claims and equivalents thereto.

## Claims

1. A non-aqueous electrolyte solution for a secondary battery, comprising:
(A) a lithium salt;
(B) a non-aqueous organic solvent; and
(C) at least one additive selected from the group consisting of a compound represented by Chemical Formula 1 and a compound represented by Chemical Formula 2: 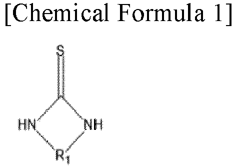 in Chemical Formula 1, R₁ is independently a C1-C3 alkyl; and 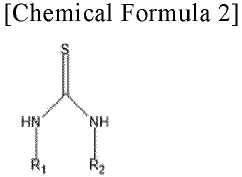 in Chemical Formula 2, R₁ and R₂ are each independently a hydrogen atom or a C1-C9 alkyl.

2. The non-aqueous electrolyte solution for a secondary battery of claim 1, wherein the compound represented by Chemical Formula 1 is a compound represented by Chemical Formula 1-1:

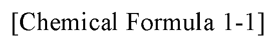

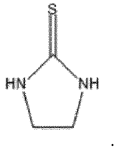

3. The non-aqueous electrolyte solution for a secondary battery of claim 1, wherein the compound represented by Chemical Formula 2 is a compound represented by Chemical Formula 2-1:

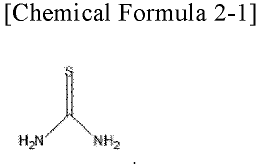

4. The non-aqueous electrolyte solution for a secondary battery of claim 1, wherein the lithium salt is at least one selected from the group consisting of LiPF₆, LiBF₄, LiSbF₆, LiAsF₆, LiClO₄, LiN(C₂F₅SO₂)₂, LiN(CF₃SO₂)₂, CF₃SO₃Li, and LiC(CF₃SO₂)₃.

5. The non-aqueous electrolyte solution for a secondary battery of claim 4, wherein the lithium salt is contained at a concentration of 0.1 to 2.0 M in the non-aqueous organic solvent.

6. The non-aqueous electrolyte solution for a secondary battery of claim 1, wherein the non-aqueous organic solvent is at least one selected from the group consisting of linear carbonate, cyclic carbonate, linear ester, and cyclic ester.

7. The non-aqueous electrolyte solution for a secondary battery of claim 6, wherein:
the linear carbonate is at least one carbonate selected from the group consisting of dimethyl carbonate, diethyl carbonate, dipropyl carbonate, methyl propyl carbonate, ethyl propyl carbonate, ethyl methyl carbonate, and mixtures thereof,
the cyclic carbonate is at least one carbonate selected from the group consisting of ethylene carbonate, propylene carbonate, 1,2-butylene carbonate, 2,3-butylene carbonate, 1,2-pentylene carbonate, 2,3-pentylene carbonate, vinylene carbonate, vinyl ethylene carbonate, and fluoroethylene carbonate,
the linear ester is at least one ester selected from the group consisting of methyl propionate, ethyl propionate, propyl acetate, butyl acetate, and ethyl acetate, and
the cyclic ester is at least one ester selected from the group consisting of gamma-butyrolactone, caprolactone, and valerolactone.

8. The non-aqueous electrolyte solution for a secondary battery of claim 6, wherein the non-aqueous organic solvent comprises the linear carbonate and the cyclic carbonate that are mixed in a volume ratio of 1:9 to 9:1.

9. The non-aqueous electrolyte solution for a secondary battery of claim 1, wherein an amount of the compound represented by Chemical Formula 1 or Chemical Formula 2 is 10 to 100,000 ppm based on a total amount of the electrolyte solution.

10. The non-aqueous electrolyte solution for a secondary battery of claim 1, further comprising at least one lifespan prolonging additive selected from the group consisting of vinyl carbonate, vinyl ethylene carbonate, fluoroethylene carbonate, and tetrahydrofuro[3,2-b]furan-2,5-dione.

11. The non-aqueous electrolyte solution for a secondary battery of claim 1, further comprising at least one high-temperature performance enhancing additive selected from the group consisting of 1,3-propane sultone, 1,3-propene-1,3-sultone, ethylene sulfate, 1,4-butane sultone, 1,3-propanediol cyclic sulfate, 4,4'-bi-1,3,2-dioxathiolane-2,2,2',2'-tetraoxide, 1,3-divinyltetramethyldisiloxane, and 2,4,8,10-tetraoxa-3,9-dithiaspiro[5.5]undecane.

12. The non-aqueous electrolyte solution for a secondary battery of claim 1, further comprising at least one power enhancing additive selected from the group consisting of bis(triethylsilyl) sulfate, bis(trimethylsilyl) sulfate, trimethylsilyl ethenesulfonate, triethylsilyl ethenesulfonate, and tetraphenyl (propane-2,2-diylbis(4,1-phenylene)) bis(phosphate).

13. The non-aqueous electrolyte solution for a secondary battery of claim 1, further comprising at least one high-temperature performance and power enhancing additive selected from the group consisting of lithium difluorophosphate, lithium bis(oxalato)borate, lithium bis(fluorosulfonyl)imide, lithium bis(trifluoromethanesulfonyl)imide, cesium hexafluorophosphate, cesium bis(fluorosulfonyl)imide, cesium bis(trifluoromethanesulfonyl)imide, lithium difluoro(oxalato)borate, lithium tetrafluoro oxalato phosphate, lithium difluoro bis(oxalato) phosphate, and lithium bis(phosphorodifluoridate) triethylammonium ethenesulfonate.

14. A lithium secondary battery, comprising:
(a) a cathode comprising a cathode active material capable of intercalating and deintercalating lithium;
(b) an anode including an anode active material capable of intercalating and deintercalating lithium;
(c) the non-aqueous electrolyte solution for a secondary battery of any one of claims 1 to 13; and
(d) a separator.
